# EUROPEAN PATENT APPLICATION

(11) **EP 4 765 545 A1**
(43) Date of publication of application: **24.06.2026**
(21) Application number: 25203664.5
(22) Date of filing: 22.09.2025
(51) Int. Cl.: H02J 3/1814, G05F 1/70, H02J 3/1878

(54) **A DYNAMIC POWER FLOW CONTROLLER (DPFC) FOR REGULATING POWER FLOW IN A POWER TRANSMISSION LINE**

(30) Priority: 22.12.2024 SA 123247610
(71) Applicant: Saudi Electricity Company, 13342 Riyadh (SA)
(72) Inventor: HASSAN, Salah Eldeen Gasim Mohamed, 13342 Riyadh, (SA)
(74) Representative: J A Kemp LLP

(57) **Abstract**

The present disclosure discloses a Response Enhanced-TAST (RE-TAST) device (104) as a Dynamic Power Flow Controller (DPFC). The DPFC comprises a Response Enhanced high-rated Sen Transformer (REST) and a low-rated Transistorized Sen Transformer (TST) configured to have a common transformer. The transformer comprises a multi-phase primary winding and a plurality of secondary windings. Further, the plurality of secondary windings is divided into a plurality of groups such that each group comprises a configurable first section of secondary windings associated with the REST and a second section of secondary windings associated with the TST. The configurable first section of secondary windings are connected to a plurality of Power-Electronics (PE)-based switches and a respective PE-based bypass switch. The second section of secondary windings is connected to a plurality of Power-Electronics (PE)-based switches, power transistors (TR1-TR4) and a respective PE-based bypass switch. Further, an operation of the plurality of PE-based switches and the respective PE-based bypass switches provides a compensation voltage for regulating power flow in a power transmission line.

## Description

### TECHNICAL FIELD

The present disclosure relates to the field of power controllers and more particularly relates to providing a Response-Enhanced Power Transistor Assisted Sen Transformer (RE-TAST) based Dynamic Power Flow Controller (DPFC).

### BACKGROUND

The information disclosed in this background of the disclosure section is only for enhancement of understanding of the general background of the invention and should not be taken as an acknowledgement or any form of suggestion that this information forms the prior art already known to a person skilled in the art.

Power transmission lines exist as a crucial medium for transmission of electric power between a sending end and a receiving end. Electrical power systems are becoming more prone to dynamics that endanger their security and stability. Power generation as well as power demand are becoming more flexible and dynamic. The transmission and distribution of power need to be more flexible to meet the arising dynamics successfully. A shift to a smart grid is a must in the renewable energy and electric vehicles era, and this shift necessitates use of technically competent and economically viable power flow controllers.

Various efforts have been made over the years to come up with viable power flow controllers. One such solution known in the art is the Voltage-Sourced Converter (VSC)-based Unified Power Flow Controller (UPFC) which comprises two VSC converters coupled through a common Direct Current (DC) terminal. One VSC converter is connected in shunt with a power transmission line through a coupling transformer, and the other VSC converter is inserted in series with the power transmission line through an interface transformer. The series converter is controlled to inject a voltage phasor, in series with the power transmission line, the magnitude of which can be varied from zero to its maximum value, and its phase angle can independently be varied from 0° to 360°, all at a fast response rate. The UPFC is equivalent to a Static Synchronous Compensator (STATCOM), and a Static Synchronous Series Compensator (SSSC), which are both inverter-based. The STATCOM is connected in shunt to a busbar and injects a current into the power system at the point of connection. The SSSC is connected in series to a power transmission line and injects a voltage in series with it.

This UPFC is the most versatile Flexible AC Transmission (FACTS) device as it has the functionality of both shunt and series FACTS devices, and possesses three control parameters, which are regulation of voltage of the busbar in which it is connected, regulation of the series injected voltage magnitude, and regulation of the series injected voltage angle, and thus can independently control the active and reactive power flow in transmission lines. However, the installation and operating costs associated with the UPFC are very high, and in result, it is installed at only three locations globally.

Another such solution is a Power Transistor Assisted Sen Transformer (TAST), which is also a FACTS device that can operate on electrical power transmission and distribution networks. The TAST composes of a highly rated Sen Transformer (ST) and a lightly rated Transistorized Sen Transformer (TST). The ST operates in stepwise mode and provides injection voltages that are of limited operating points. Further, the TST operates continuously and provides voltages that can be varied smoothly at a fast response rate with the technique of Pulse Width Modulation (PWM). When the shunt part of the TAST is connected to a busbar, and its series part connected in series to a transmission line, it injects voltage in series with the transmission line. The series injected voltage of the TAST is the algebraic sum of the voltages of the ST and TST. It thus can dynamically control the voltage magnitude and voltage phase angle of the transmission/distribution lines independently by increasing or decreasing the voltage value and/or advancing or retarding the voltage phase angle in the busbar in front of it, and thus can dynamically and independently control the active and reactive power flow.

While the conventional TAST has an improved response rate as compared to the conventional ST, however, this feature does not apply all through the operating area of the TAST. In fact, this feature applies only within the operating area of the low rated TST, as part of the TAST, which is a narrow operating area within the operating area of the TAST. Within the TAST, as the conventional ST relies on mechanical On-load Tap-changing (OLTC) switches, the transition from an operating point of its ST to another adjacent operating point takes a two-seconds time, which is a long time in the perspective of power system stability. The essential time for multiple movements between operating points of the ST is obviously longer. Accordingly, the TAST would fail in assuring the essential fast response when the desired operating condition necessitates jumping from an operating point of the ST to another operating point. The restriction of the fast response rate feature to the working area of the TST only, as part of the TAST is thus, a shortcoming.

There is therefore a need for a power flow controller that overcomes the above-mentioned limitations and provides additional advantages.

### SUMMARY

The foregoing summary is illustrative only and is not intended to be in any way limiting. In addition to the illustrative aspects, embodiments, and features described above, further aspects, embodiments, and features will become apparent by reference to the drawings and the following detailed description.

In one non-limiting embodiment of the present disclosure, a Dynamic Power Flow Controller (DPFC) for regulating power flow in a power transmission line is disclosed. The DPFC comprises a Response Enhanced high-rated Sen Transformer (REST) and a low-rated Transistorized Sen Transformer (TST) configured to have a common transformer. In one exemplary aspect, the transformer comprises a multi-phase primary winding and a plurality of secondary windings. Further, the plurality of secondary windings is divided into a plurality of groups such that each group comprises a configurable first section of secondary windings associated with the REST and a second section of secondary windings associated with the TST. Furthermore, the configurable first section of secondary windings is connected to a plurality of Power-Electronics (PE)-based switches and respective PE-based bypass switches. The second section of secondary windings is connected to a plurality of other Power-Electronics (PE)-based switches and respective PE-based bypass switches. The PE-based switches connected to the configurable first section of secondary windings operate discretely with integral cycle ON or OFF, while the PE-based switches connected to second section of secondary windings operate continuously in PWM based within-cycle fast ON-OFF mode. Further, an operation of the plurality of the configurable first section and second section of secondary windings by switching of different PE-based switches provide a compensation voltage for regulating power flow in a power transmission line.

In another non-limiting embodiment of the present disclosure, a method of regulating power flow in a power transmission line is disclosed. The method comprises configuring a Dynamic Power Flow Controller (DPFC) in a power transmission line. In one exemplary aspect, the DPFC comprises a Response Enhanced high-rated Sen Transformer (REST) and a low-rated Transistorized Sen Transformer (TST) configured to have a common transformer. Further, the transformer comprises a multi-phase primary winding and a plurality of secondary windings. Also, the plurality of secondary windings is divided into a plurality of groups such that each group comprises a configurable first section of secondary windings associated with the REST and a second section of secondary windings associated with the TST. Furthermore, the configurable first section is connected to a plurality of Power-Electronics (PE)-based switches and respective PE-based bypass switches. The second section of secondary windings is connected to a plurality of other Power-Electronics (PE)-based switches and respective PE-based bypass switches. The method further comprises generating, by the REST, a first compensation voltage by closing a PE-based switch of the corresponding plurality of PE-based switches. The method further comprises generating, by the TST, a second compensation voltage by switching the corresponding plurality of the PE-based switches. Further, the method comprises generating a compensation voltage based on the first compensation voltage and the second compensation voltage, for injecting in the power transmission line to regulate the power flow.

### BRIEF DESCRIPTION OF THE DRAWINGS

The accompanying drawings, which are incorporated in and constitute a part of this disclosure, illustrate exemplary embodiments and, together with the description, serve to explain the disclosed principles. The same numbers are used throughout the figures to reference like features and components. Some embodiments of at least one of devices and methods in accordance with embodiments of the present subject matter are now described, by way of example only, and with reference to the accompanying figures, in which:
**Figure 1** depicts an exemplary environment 100 for implementation of the proposed RE-TAST device in a power transmission line in accordance with an embodiment of the present disclosure.
**Figure 2** depicts a structural diagram 200 of the proposed RE-TAST device 104 in accordance with an embodiment of the present disclosure.
**Figure 3A** depicts an exemplary circuit arrangement 300A of part of primary and secondary windings of the RE-TAST device, in accordance with an embodiment of the present disclosure.
**Figure 3B** depicts an exemplary sequence of switching signals corresponding to PE-switches and PE-by-pass switch of the REST, in accordance with an embodiment of the present disclosure.
**Figure 4A** depicts a circuit arrangement 400A of transistorized AC chopper associated with a TST, in accordance with an embodiment of the present disclosure.
**Figure 4B** depicts an exemplary sequence of switching signals corresponding to a transistorized AC chopper and its PE-by-pass switch, in accordance with an embodiment of the present disclosure.
**Figures 5A-5D** depict voltage magnitude increase performed by a RE-TAST device, in accordance with an embodiment of the present disclosure.
**Figures 6A-6F** depict voltage magnitude reduction performed by a RE-TAST device, in accordance with an embodiment of the present disclosure.
**Figures 7A-7D** depict phase angle advancement performed by a RE-TAST device, in accordance with an embodiment of the present disclosure.
**Figures 8A-8D** depict phase angle retardation performed by a RE-TAST device, in accordance with an embodiment of the present disclosure.
**Figures 9A-8D** depict simultaneous voltage magnitude increase and phase angle advance performed by a RE-TAST device, in accordance with an embodiment of the present disclosure.
**Figure 10** depicts control area of voltage magnitude increase/decrease and/or phase angle advance/retard performed by a RE-TAST device, in accordance with an embodiment of the present disclosure.
**Figure 11** illustrates, by way of a flowchart, an exemplary method 1100 for regulating power flow in a power transmission line, in accordance with an embodiment of the present disclosure.

The figures depict embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the spirit and the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a device or system or apparatus proceeded by "comprises... a" does not, without more constraints, preclude the existence of other elements or additional elements in the device or system or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

As described in the background section, while a conventional Power Transistor Assisted Sen Transformer (TAST) has an improved response rate as compared to a conventional Sen Transformer (ST), however, this feature does not apply all through the operating area of the TAST. In fact, this feature applies only within the operating area of a low rated TST, as part of the TAST. The operating area of the TST represents a very small portion of that of the TAST. In particular, within the TAST, as the conventional ST relies on mechanical On-load Tap-changing (OLTC) switches, a transition from an operating point of its ST to another adjacent operating point takes a significant amount of time thereby increasing the response time and affecting the overall performance.

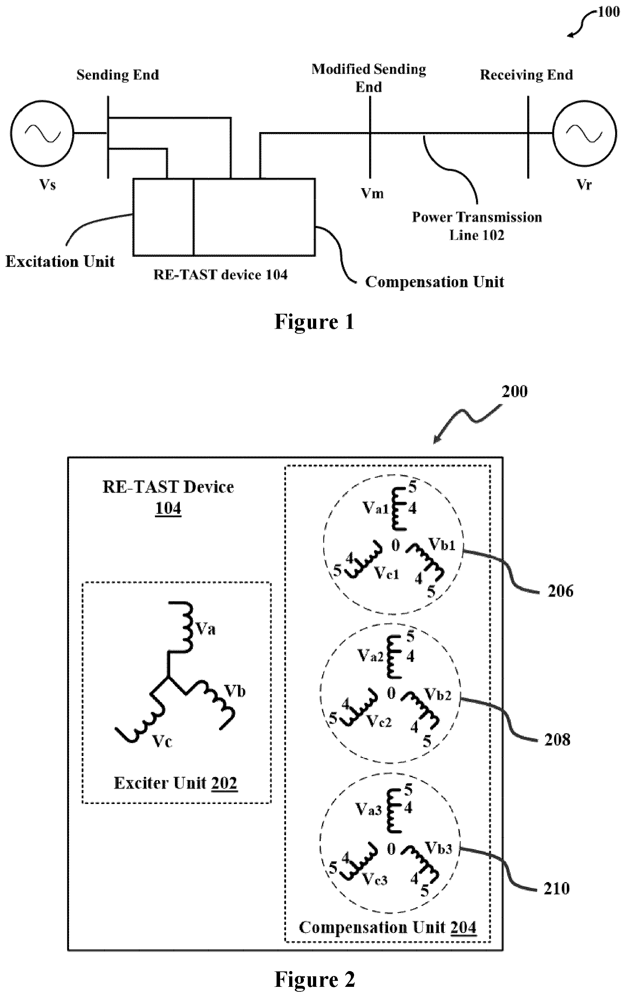

To overcome this issue, and to provide additional advantages, the present disclosure describes a modified model of the conventional TAST device, with a capability of a wider fast response operating area as compared to that of the TAST device. In particular, the present disclosure discloses a Response Enhanced-TAST (RE-TAST) by replacing mechanical OLTC switches with electronic solid-state switches, which are also known as Power Electronics (PE)-based switches, at a reasonable cost. The present disclosure also describes a Response Enhanced Limited Angle TAST (RE-LA-TAST) device that extends a fast response operating area within a limited operating angle at an optimized overall cost. In fact, no particular application of the UPFC utilized the full 360° operation area capability. A detailed description of the proposed RE-TAST device as a DPFC is elaborated in the upcoming paragraphs in conjunction with **Figures 1-8****.**

**Figure 1** depicts an exemplary environment 100 for implementation of the proposed RE-TAST device in a power transmission line in accordance with an embodiment of the present disclosure. The exemplary environment 100 depicts a power transmission line 102 having a sending end with a multi-phase voltage V_{S}, a modified sending end with a multi-phase voltage Vₘ, and a receiving end with a multi-phase voltage Vᵣ. To regulate power flow within the power transmission line 102, a proposed RE-TAST device 104 is integrated within the power transmission line 102. In one embodiment, the RE-TAST device 104 receives the multi-phase voltage V_{S} from the sending end and generates a compensation voltage V_{RE-TAST} to be injected into the power transmission line 102. This modifies the sending end voltage V_{S} of the sending end bus, to the left-hand side to the RE-TAST, to a modified sending end voltage Vₘ at the bus to the right-hand side to the RE-TAST. In another embodiment, the RE-TAST device 104 may also alter a phase angle difference (δ) between the sending end and the modified sending end. A detailed description of the structure of the RE-TAST device 104 along with its functionality of regulating the voltage and/or the phase angle is elaborated in the forthcoming paragraphs in conjunction with **Figures 2-9****.**

**Figure 2** depicts a structural diagram 200 of the proposed RE-TAST device 104 in accordance with an embodiment of the present disclosure. The proposed RE-TAST device 104 comprises a Response Enhanced high-rated Sen Transformer (REST) and a low-rated Transistorized Sen Transformer (TST) which are configured with a common transformer. The transformer comprises a multi-phase primary winding which forms an exciter unit 202. In one embodiment, the primary winding may be a three-phase primary winding and may be configured to receive the three-phase voltage Vs from the sending end of the power transmission line 102. In **Figure 2****,** the transmission voltage is provided to the exciter unit, and the compensation unit receives power from the exciter unit by induction, in transformer action.

Further, the transformer comprises a plurality of secondary windings which forms a compensation unit 204. In one embodiment, the plurality of secondary windings may be divided into a plurality of groups, where each group is associated with a corresponding phase of the three-phase voltage V_{S}. Further, each group comprises one or more secondary windings and each of the one or more secondary windings in each group comprises a configurable first section of secondary windings associated with the REST and a second section of secondary windings associated with the TST. With reference to **Figure 2****,** in an embodiment, the plurality of secondary windings may be divided into three groups viz, groups 206, 208 and 210. Each group comprises 3 secondary windings. For instance, the group 206 may comprise secondary windings a₁, b₁ and c₁. On similar lines, the group 208 may comprise secondary windings a₂, b₂ and c₂, and the group 210 may comprise secondary windings a₃, b₃ and c₃. Furthermore, the windings in each group may comprise a section from 0-4 associated with the REST and a section 4-5 associated with the TST. It may however be appreciated by a skilled person that the first section of secondary windings associated with the REST are configurable in the sense that RE-TAST device 104 composes of only two-thirds of the secondary side windings of the REST with a full TST.

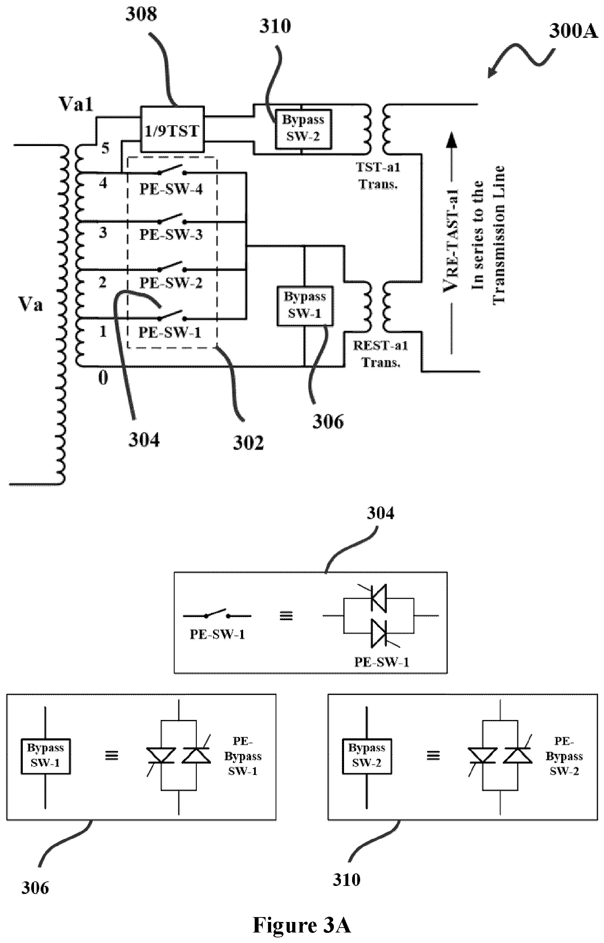

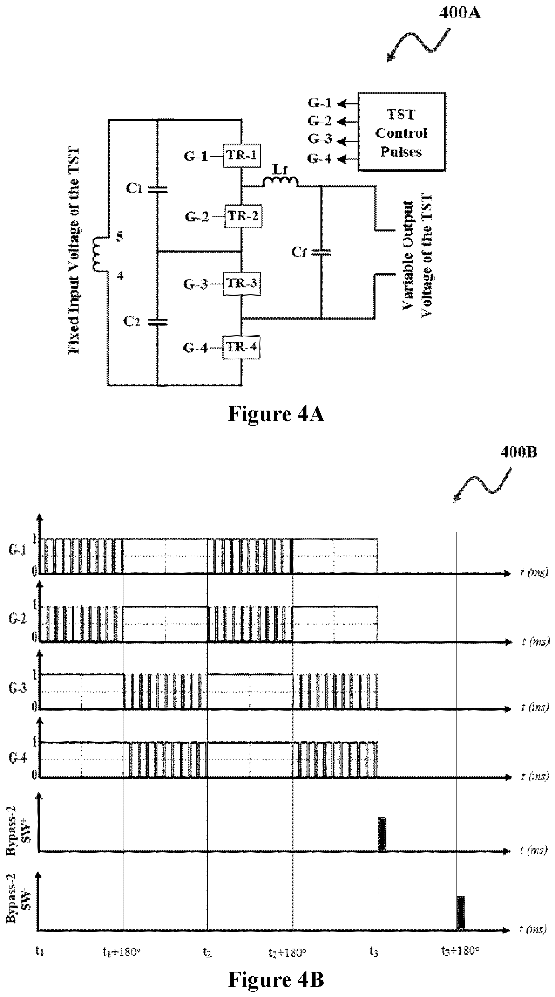

Moving on, the secondary windings in each group are connected to a plurality of Power Electronics (PE)-based switches as depicted in **Figure 3A****.** In particular, **Figure 3A** depicts an exemplary circuit arrangement 300A of primary winding a and secondary winding a₁ of the RE-TAST device 104, in accordance with an embodiment of the present disclosure. As depicted in **Figure 3A****,** and as described in the preceding paragraph, the secondary winding a₁ comprises a section of secondary windings numbered 0-4 corresponding to the REST and a secondary winding numbered 4-5 corresponding to the TST. A plurality of PE-based switches PE-SW1 to PE-SW4 are connected with the secondary windings' terminals numbered 0-4. Further, a plurality of PE-based switches, power transistors TR1-TR4 (depicted in **Figure 4A**) form the core of the TST as indicated by numeral 308 in **Figure 3A****.** Also, the REST and the TST are connected to respective PE-based bypass switches 306 and 310. Further, sub-figures with numerals 304, 306, and 310 depict composition of the PE-switches PE-SW1 to PE-SW4 of the REST and the PE-based by-pass switches as shown in **Figure 3A****.** In one embodiment, the operation of the plurality of PE-based switches PE-SW1 to PE-SW4 and the plurality of the PE-based switches, power transistors TR1-TR4 provides a compensation voltage V_{RE-TAST} to be injected into the power-transmission line 102 for regulating power flow within the power transmission line 102. When no compensation voltage needs to be injected into the power-transmission line 102 from the REST, the PE-based bypass switch 306 is operated. Similarly, when no compensation voltage needs to be injected into the power-transmission line 102 from the TST, the bypass switch 310 is operated. Further, in one embodiment, the plurality of PE-based switches power transistors TR1-TR4 may be Metal Oxide Silicon Field Effect Transistors (MOSFETs) or Insulated-Gate Bipolar Transistors (IGBTs). Further, in one embodiment, the plurality of PE-based switches PE-SW1 to PE-SW4 and the PE-based bypass switches 306, 310 may be a Silicon Controlled Rectifier (SCR) thyristor-based switches or Triode for Alternating Current (TRIAC)-based switches.

In an embodiment, number of turns of the windings of the second section of the secondary associated with the TST is fractional of number of turns of the windings of the first section of the secondary associated with the REST.

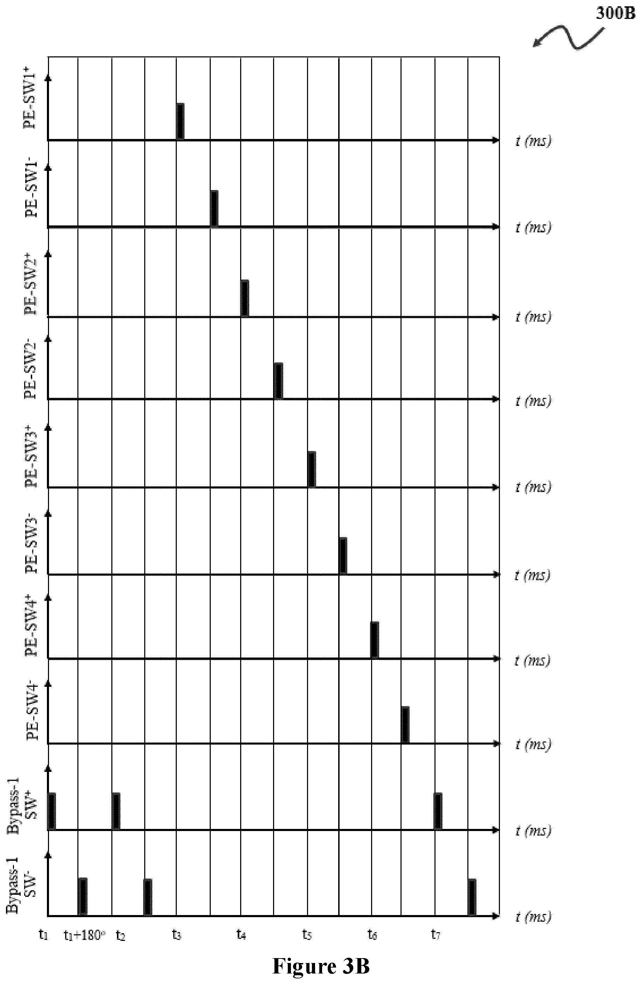

An exemplary sequence of the switching signals to be sent to switch ON and OFF the PE-switches PE-SW1 to PE-SW4 of the REST, and the corresponding by-pass switch of **Figure 3A****,** are depicted in **Figure 3B****.** In particular, as depicted in **Figure 3B****,** there may always be a PE-switch amongst the plurality of the PE-switches PE-SW1 to PE-SW4 in the ON state and all other PE-switches and corresponding by-pass switch in the OFF state. Alternatively, the by-pass switch may be switched ON while all of the PE-switches PE-SW1 to PE-SW4 are switched OFF, when no compensation voltage of the REST is needed. An SCR/TRAIC switch in the OFF state allows to withstand a peak reverse voltage of the REST input, and in the ON state carries a maximum current that may pass in the REST circuit.

**Figure 4A** depicts a circuit arrangement 400A of transistorized AC chopper associated with the TST, in accordance with an embodiment of the present disclosure. The transistorized AC chopper as depicted in **Figure 4A** is MOSFET or Insulated-Gate Bipolar Transistor (IGBT)-based AC chopper comprising four MOSFETs or four IGBTs connected in series. **Figure 4A** further depicts a switching signal source that generates switching signals to be sent to the gates G1-G4 of the MOSFETs/IGBTs. In one embodiment, through the variation of duty cycle of the switching signals, the TST is configured to operate in a continuous and fast mode. An exemplary sequence of the switching signals to be sent to the gates G1-G4 is depicted in **Figure 4B****.** In particular, as depicted in **Figure 4B****,** there may always be one MOSFET/IGBT switch in the OFF state and the other 3 MOSFET/IGBT switches in the ON state. While the TST assures a fast and continuous transition from an operating point to another with fine change of the pulse width, a fast cancelation of the TST voltage is also possible with operation of the corresponding PE-based bypass switch. A MOSFET/IGBT switch in the OFF withstands a peak reverse voltage of the AC chopper's input, and in the ON state carries a maximum current that may pass in the AC chopper's circuit.

Considering the functionality of the AC chopper in context to the switching signals - in one embodiment, AC chopper has three operation modes, which are the active, freewheeling, and dead time mode. In these modes, the chopper provides energy, freewheels, and bypasses, respectively. In the active mode, the supply voltage appears across terminals of the corresponding injection transformer of the TST. In the positive half-cycle, the current passes through TR-1 and the body diode of TR-4, and in the negative half-cycle, it passes through TR-4 and the body diode of TR-1. Dead time is a requisite to prevent current spikes that arise when using practical Transistors. During dead time, for safe commutation, switches (TR-1 and TR-2) are both turned OFF simultaneously in the positive half-cycle, and switches (TR-3 and TR-4) are both turned OFF simultaneously in the negative half-cycle. However, at the same time, a current path has to be provided to avoid the voltage spikes. Therefore, both switches (TR-3 and TR-4) are continuously ON in the positive half-cycle and both switches (TR-1 and TR-2) are continuously ON in the negative half-cycle without respect to the control strategy that is determined by the duty cycle. During OFF-state periods of switches TR-1 and TR-4, terminals of the injection transformer are isolated from the supply. They are short-circuited through the freewheeling path, implying that voltage of the injection transformer terminals is zero. Current of the injection transformer thus naturally decays through TR-3 and body diode of TR-2 in the positive half cycle, and through T-R2 and body diode of TR-3 in the negative half cycle.

**Figures 2-4** and their associated description elaborates a structural arrangement and components of the RE-TAST device 104 that is configured to provide a compensation voltage to regulate the power flow in the power transmission line 102. The operation of the RE-TAST device 104 to regulate the power flow is now elaborated. In one embodiment, the REST operates through closing a PE-based switch amongst the plurality of PE-based switches PE-SW1 to PE-SW4 and provides a first compensation voltage V_{REST}. In one embodiment, the first compensation voltage V_{REST} is a major component of the compensation voltage V_{RE-TAST}. Further, the first compensation voltage V_{REST} is discretely controlled at a fast response rate from zero to its maximum value within a 360° angle range. However, if there is no requirement of injecting compensation voltage of the REST, V_{REST}, each of the plurality of PE-based switches PE-SW1 to PE-SW4 are left open, and the corresponding PE-based bypass switch 306 is closed.

Conversely, as recited in the preceding paragraphs, the TST operates in a continuous and fast mode by variation of the duty-cycle of the switching signals those are sent to the gates G1-G4 that drive the AC choppers of the TST 308. The TST 308 provides a second compensation voltage V_{TST}, which is continuously controlled from zero to its maximum value within the entire 360° angle range. In one embodiment, the second compensation voltage V_{TST} is a minor component of the compensation voltage V_{RE-TAST} and a key function of the second compensation voltage V_{TST} is to fill the voltage and power flow control gaps of the REST, as well as, to assure a continuous rather than step-wise control of the REST, and accordingly, of the RE-TAST. For that purpose, the TST 308 offers a smoothly, continuously, and quickly controllable additive/subtractive and a leading/lagging voltage. Further, as described above, if there is no requirement of injecting this minor compensation voltage V_{TST}, no switching signal is sent to any of the gates G1-G4 of the plurality of the power transistors TR1-TR4, and the corresponding PE-based bypass switch 310 is closed.

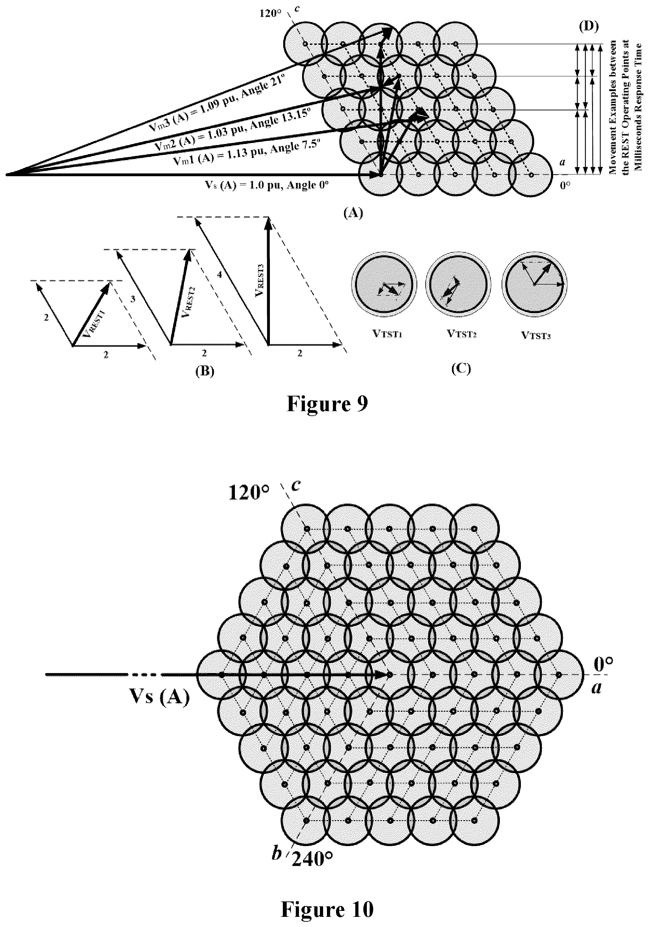

Once the first compensation voltage V_{REST} and the second compensation voltage V_{TST} are obtained, said voltages are algebraically added to each other to represent the compensation voltage V_{RE-TAST} that can be injected into the power transmission line 102. It may further be noted by a skilled person that through variation of the compensation voltage of the REST and the TST in its magnitude and over a pre-defined angle range, the RE-TAST device 104 can provide a compensation voltage that can cover an entire voltage control area and can be controlled with respect to the magnitude over the entire pre-defined angle range. In one embodiment, the pre-defined angle range may be 0°-360°. With the entire 0°-360° angle range, the voltage control area is a hexagonal area around tip of the sending end voltage as can be seen depicted in **Figure 10****.** Independent control of the voltage magnitude and angle within this hexagonal voltage control area results in independent control of the active and reactive power of the power transmission line 102 within a similar hexagonal area around the value of the original amount of power flow, that represents the original operating point of the transmission line 102.

In particular, by enabling the proposed RE-TAST device 104 with suitable control strategies, the RE-TAST device 104 can regulate the transmission and distribution lines series voltage, phase angle, or both series voltage and phase angle, at a speedy response rate capability in the range of milli-seconds. In an embodiment, the control strategies enable regulation of the transmission and distribution line resistance only, reactance only, or both resistance and reactance (impedance) altogether. In another embodiment, the control strategies enable independent and bidirectional active and reactive power flow control. The following paragraphs address these control strategies.

### Voltage magnitude regulation:

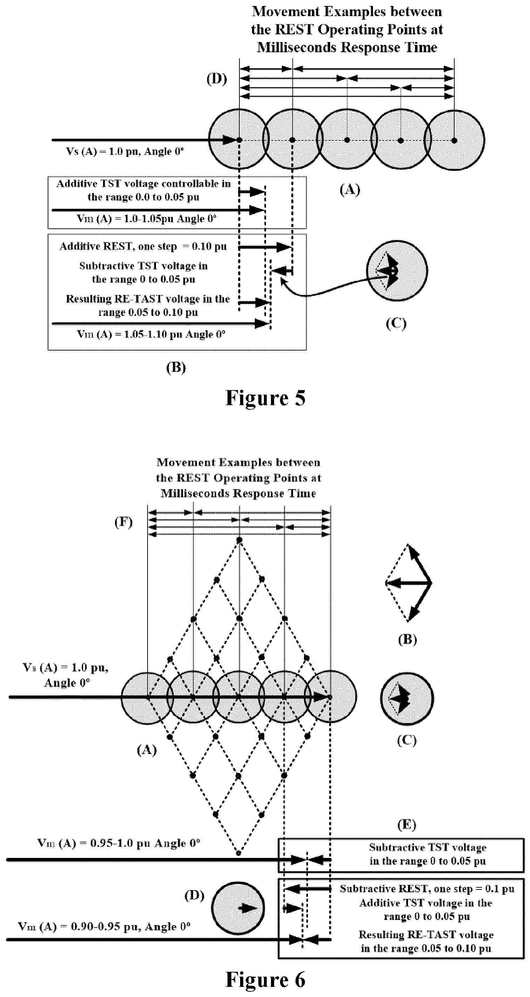

For the purpose of voltage magnitude regulation, the compensation voltage V_{RE-TAST} that the RE-TAST device 104 provides can be in-phase or out-of-phase to the sending end voltage Vₛ so as to increase or decrease it, respectively. For example, to boost voltage of a phase "A" of the power transmission line 102, with reference to **Figure 5****,** the REST needs to provide an additive voltage and the TST needs to provide an additive or subtractive voltage. The secondary winding a₁ (depicted in **Figure 2****,** and **Figure 3A**) is activated to provide the in-phase i.e., the additive compensation voltage of the REST as can be seen in **Figure 5****.** Further, the AC chopper which is attached to the section 4-5 of the winding a₁ is activated to provide the additive voltage of the TST, and the AC choppers which are attached to the sections 4-5 of the windings b₁ and c₁ (depicted in **Figure 2**) are activated to provide the out-of-phase i.e., the subtractive compensation voltage of the TST as can be seen in **Figure 5****.** To obtain the subtractive voltage of the TST, the duty cycle of the AC choppers which are attached to the sections 4-5 of the windings b₁ and c₁ are set equal to maintain the angle of the output voltage equal to 180°. The desired magnitude of the effective modified sending end voltage can be realized flexibly, continuously and at a fast response rate by a proper combination of the compensation voltages of the REST and the TST. In one embodiment, **Figure 5A** shows an operating area that corresponds to voltage magnitude increase. On similar lines, **Figure 5B** shows additive voltages of the REST and the additive/subtractive voltages of the TST. It also shows the sending end and the resulting effective modified sending end voltages of phase "A" of the power transmission line 102. **Figure 5C** shows the corresponding voltages of the phases b₁ and c₁. **Figure 5D** shows exemplary possible movements from any operating point of the REST to any other operating point with a response time in the range of milliseconds.

Conversely, to reduce the voltage of the sending end of the power transmission line 102, windings b₁ and c₁ are activated to provide the out-of-phase i.e., the subtractive compensation voltage through the REST and the TST, and the winding a₁ is activated to provide the in-phase voltage through its TST. The desired magnitude of the effective modified sending end voltage can be realized flexibly, continuously and at a fast response rate by a proper combination of the compensation voltages of the REST and the TST. In particular, **Figure 6A** shows that a control area of the RE-TAST device 104 is covered for purpose of reducing the sending end voltage. Further, **Figures 6B** and **6C** show the subtractive voltages of the REST and TST, respectively. Furthermore, **Figure 6D** shows the additive voltage of the TST. **Figure 6E** shows the subtractive voltage of the TST and a resulting effective modified sending end voltage. **Figure 6E** also shows the subtractive voltage of the REST, an additive voltage of the TST, the sending end of the power transmission line 102, the resulting voltage of the RE-TAST, and the resulting effective modified sending end voltage of the power transmission line 102. **Figure 6F** shows exemplary possible movements from any operating point of the REST to any other operating point with a response time in the range of milliseconds. Furthermore, it may also be noted that for the subtractive action of the REST and the TST, phases b₁ and c₁ are equally tapped and their corresponding AC choppers are equally modulated, respectively.

Further, for the voltage magnitude regulation of other phases of the power transmission line 102, similar procedure as described in the preceding paragraphs may be adopted.

### Phase Angle Regulation:

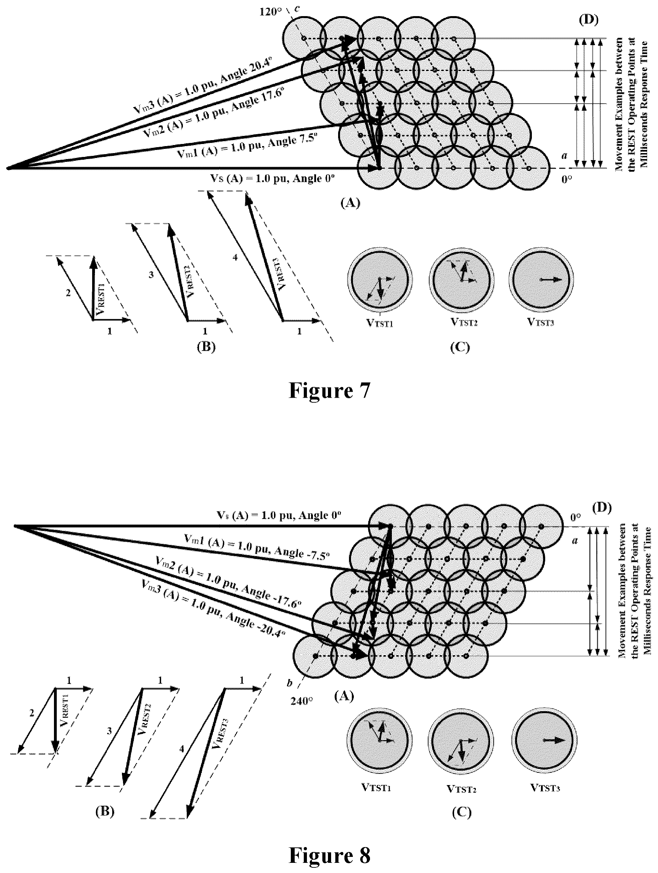

For the purpose of phase angle regulation, voltage of phase "A" of the power transmission line 102 is considered herein. Further, the proposed RE-TAST device 104 can advance or retard the phase angle of the sending end voltage Vₛ. In view of **Figure 2****,** to advance the phase angle of the sending end voltage Vₛ, the windings a₁ and c₁ of the REST and windings a₁, b₁, and c₁ of the TST are activated to realize an effective modified sending end voltage within the angle range of (0°-120°). The desired phase angle of the effective modified sending end voltage can be realized flexibly, continuously and at a fast response rate by a proper combination of the compensation voltages of the REST and the TST. **Figure 7A** shows three examples of the phase angle advancing with the voltage magnitude kept constant. **Figure7B** shows the activated operating point of the REST and the corresponding REST's voltages. Further, **Figure 7C** shows the voltage of the TST AC-choppers and the corresponding TST's output voltages. **Figure 7D** shows exemplary possible movements from any operating point of the REST to any other operating point with a response time in the range of milliseconds.

Conversely, to retard the phase angle of the sending end voltage Vₛ, the windings a₁ and b₁ of the REST and the windings a₁, b₁, and c₁ of the TST may be activated to realize an effective modified sending end voltage within the angle range of (240°-360°). The desired phase angle of the effective modified sending end voltage can be realized flexibly, continuously and at a fast response rate by a proper combination of the compensation voltages of the REST and the TST. **Figure 8A** shows three examples of phase angle retardation with the voltage magnitude kept constant. **Figure 8B** shows operating points of the REST in each of the three examples and the corresponding REST's voltages. Further, **Figure 8C** shows voltage of the TST AC-choppers and the corresponding TST's output voltages. **Figure 8D** shows exemplary possible movements from any operating point of the REST to any other operating point with a response time in the range of milliseconds.

It may be noted by a skilled person that for the voltage phase angle regulation of other phases of the power transmission line 102, similar procedure as described in the preceding paragraphs may be adopted.

### Voltage Magnitude and phase angle regulation:

By combining actions of the RE-TAST device 104 described in the preceding paragraphs with respect to the voltage magnitude regulation and the phase angle regulation, the RE-TAST device 104 may increase or decrease the magnitude and/or advance or retard the phase angle of the sending end voltage simultaneously and selectively. To simultaneously increase the voltage magnitude and advance the phase angle of the sending end voltage Vₛ, the windings a₁ and c₁ of the REST and windings a₁, b₁, and c₁ of the TST are activated to realize an effective modified sending end voltage within the angle range of (0°-120°). The desired voltage magnitude and phase angle of the effective modified sending end voltage can be realized flexibly, continuously and at a fast response rate by a proper combination of the compensation voltages of the REST and the TST. Three examples for simultaneous different voltage magnitudes and different phase angles are provided as elaborated in the above paragraph and depicted in **Figure 9. Figure 9A** shows three examples of the voltage magnitude increasing and phase angle advancing. **Figure 9B** shows the activated operating point of the REST and the corresponding REST's voltages. Further, **Figure 9C** shows the voltage of the TST AC-choppers and the corresponding TST's output voltages. **Figure 9D** shows exemplary possible movements from any operating point of the REST to any other operating point with a response time in the range of milliseconds.

It may be noted by a skilled person that for the simultaneous voltage magnitude and phase angle regulation of other phases of the power transmission line 102, similar procedure as described in the preceding paragraphs may be adopted.

Thus, at a fast response rate in the range of milli-seconds, and hence, more flexibly than the conventional TAST, the RE-TAST device 104 can control active and reactive power flow simultaneously and independently in both directions. The RE-TAST device 104 can regulate the series voltage magnitude and phase angle selectively or simultaneously and can also regulate voltage of a bus in front of it. Thus, it can control the active and reactive power flow independently in both directions. The independent and also fast power flow control is useful for most economic transfer of the active power with necessary fast response to disturbances. Also, the RE-TAST device 104 provides a greater series voltage at a lesser cost in comparison to the state-of-the-art power flow controllers, in particular the UPFC, and thus, is a more cost-effective candidate for use in the application of power flow control.

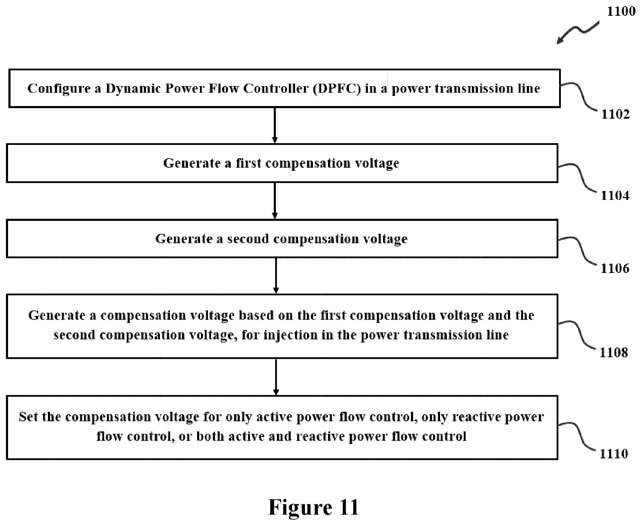

**Figure 11** illustrates, by way of a flowchart, an exemplary method 1100 for regulating power flow in a power transmission line 102, in accordance with an embodiment of the present disclosure. The method 1100 may also be described in the general context of computer executable instructions. Generally, computer executable instructions may include routines, programs, objects, components, data structures, procedures, modules, and functions, which perform specific functions or implement specific abstract data types. Among the electronic components of the switching signals generation circuit, there may be electronic chips that would be programmed to produce the appropriate switching signals.

The order in which the method 1100 is described is not intended to be construed as a limitation, and any number of the described method blocks may be combined in any order to implement the method. Additionally, individual blocks may be deleted from the methods without departing from the spirit and scope of the subject matter described.

At step 1102, the method 1100 includes configuring a Dynamic Power Flow Controller (DPFC) in a power transmission line 102. In one embodiment, the DPFC is the RE-TAST device 104 which comprises a Response-Enhanced high-rated Sen Transformer (REST) and a low-rated Transistorized Sen Transformer (TST) configured to have a common transformer. Further, the transformer comprises a multi-phase primary winding and a plurality of secondary windings. In one embodiment, the plurality of secondary windings is divided into a plurality of groups such that each group comprises a configurable first section of secondary windings associated with the REST and a second section of secondary windings associated with the TST. Further, the configurable first section of secondary windings is connected to a plurality of Power-Electronics (PE)-based switches PE-SW1 to PE-SW4 and respective PE-based bypass switch. Further, the second section of secondary windings is connected to a plurality of Power-Electronics (PE)-based switches TR1-TR4 and respective PE-based bypass switch.

At step 1104, the method 1100 includes generating a first compensation voltage V_{REST} by closing a PE-based switch of the plurality of PE-based switches PE-SW1 to PE-SW4. In one embodiment, the first compensation voltage V_{REST} is generated by the REST.

At step 1106, the method 1100 includes generating a second compensation voltage V_{TST}. In one embodiment, the second compensation voltage V_{TST} is generated by the TST.

At step 1108, the method 1100 includes generating a compensation voltage V_{RE-TAST} for injection into the power transmission line 102 in order to regulate the power flow in the power transmission line 102. In one embodiment, the compensation voltage V_{RE-TAST} is an algebraic sum of the first compensation voltage V_{REST} and the second compensation voltage V_{TST}.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Many parts of the TAST remain essential parts in the RE-TAST, as seen in **Figures 2-8****.**

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article, or a different number of devices/articles may be used instead of the shown number of devices. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

In one embodiment, the proposed RE-TAST device provides a wider fast-response area as compared to the conventional TAST at a cost that is less than that of an equally rated UPFC with fast response, error-free, non-limited full control area within the device broad design limits, continuous and smooth operation, and independent active and reactive power flow control capability.

In another embodiment, the proposed RE-TAST device has reconfigurable secondary side windings capability associated with the REST which enables realizing a RE-TAST device with an entire 360° operating area with limited components count at an optimized cost with same fast response, error-free, non-limited full control area within the device broad design limits, continuous and smooth operation, and independent active and reactive power flow control capability.

In yet another embodiment, the present disclosure also provides a customized, however fully functional, limited angle RE-TAST device (LA-RE-TAST) at a further optimized cost, with same fast response, error-free, non-limited full control area within the LA-RE-TAST device broad design limits, continuous and smooth operation, and independent active and reactive power flow control capability.

## Claims

1. A Dynamic Power Flow Controller (DPFC) (104) for regulating power flow in a power transmission line (102), the DPFC (104) comprises:
a Response Enhanced high-rated Sen Transformer (REST) and a low-rated Transistorized Sen Transformer (TST) configured to have a common transformer,
wherein:
the transformer comprises a multi-phase primary winding and a plurality of secondary windings, the plurality of secondary windings is divided into a plurality of groups such that each group comprises a configurable first section of secondary windings associated with the REST and a second section of secondary windings associated with the TST,
the configurable first section of the secondary windings is connected to a plurality of Power-Electronics (PE)-based switches (PE-SW1 to PE-SW4) and a respective PE-based bypass switch (306), the second section of the secondary windings is connected to a plurality of Power-Electronics (PE)-based switches (TR1-TR4) and a respective PE-based bypass switch (310); and an operation of the plurality of PE-based switches (PE-SW1 to PE-SW4), the plurality of Power-Electronics (PE)-based switches (TR1-TR4), and the respective PE-based bypass switches (306, 310) provides a compensation voltage (V_{RE-TAST}) for regulating power flow in a power transmission line (102).

2. The DPFC as claimed in claim 1, wherein the multi-phase primary winding of the transformer forms an exciter unit (202).

3. The DPFC as claimed in claim 2, wherein the exciter unit (202) is configured to receive multi-phase voltage (Vs) from a sending end of a power transmission line (102).

4. The DPFC as claimed in claim 1, wherein the plurality of secondary windings of the transformer form a compensator unit (204).

5. The DPFC as claimed in claim 1, wherein the REST comprises a plurality of PE-switches, and wherein the REST operates in a discrete mode through switching ON and OFF a PE-switch when receiving a switching signal.

6. The DPFC as claimed in claim 1, wherein the TST comprises one or more Alternating Current (AC) choppers, and wherein the TST operates in a continuous mode through variation of duty cycle of switching signals driving the one or more AC choppers.

7. The DPFC as claimed in claim 1, wherein the compensation voltage (V_{RE-TAST}) is an algebraic sum of a first compensation voltage (V_{REST}) and a second compensation voltage (V_{TST}).

8. The DPFC as claimed in claim 7, wherein the first compensation voltage (V_{REST}) is provided by a REST by closing a PE-based switch amongst a plurality of PE-based switches (PE-SW1 to PE-SW4), and wherein the first compensation voltage (V_{REST}) is discretely controlled from zero to a maximum value within a pre-defined angle range, responding at milliseconds range.

9. The DPFC as claimed in claim 7, wherein the second compensation voltage (V_{TST}) is provided by a TST and is continuously controlled from zero to a maximum value within a pre-defined angle range, responding at milliseconds range.

10. The DPFC as claimed in claim 1 is configured to regulate at least one of: a magnitude of the compensation voltage (V_{RE-TAST}) and a phase angle of the compensation voltage (V_{RE-TAST}).

11. A method of regulating power flow in a power transmission line (102), the method comprising:
configuring (1102) a Dynamic Power Flow Controller (DPFC) in a power transmission line, wherein the DPFC comprises:
a Response Enhanced high-rated Sen Transformer (REST) and a low-rated Transistorized Sen Transformer (TST) configured to have a common transformer,
wherein:
the transformer comprises a multi-phase primary winding and a plurality of secondary windings,
the plurality of secondary windings is divided into a plurality of groups such that each group comprises a configurable first section of secondary windings associated with the REST and a second section of secondary windings associated with the TST, and
the configurable first section of secondary windings is connected to a plurality of Power-Electronics (PE)-based switches (PE-SW1 to PE-SW4) and a respective PE-based bypass switch (306), the second section of secondary windings is connected to a plurality of Power-Electronics (PE)-based switches (TR1-TR4) and a respective PE-based bypass switch (310);
generating (1104), by the REST, a first compensation voltage (V_{REST}) by closing a PE-based switch of the plurality of PE-based switches (PE-SW1 to PE-SW4);
generating (1106), by the TST, a second compensation voltage (V_{TST}) by setting a pulse width value to switch the plurality of PE-based switches (TR1-TR4); and
generating (1108) a compensation voltage (V_{RE-TAST}) based on the first compensation voltage (V_{REST}) and the second compensation voltage (V_{TST}), for injecting in the power transmission line (102) to regulate the power flow.

12. The method as claimed in claim 11, wherein the TST comprises one or more Alternating Current (AC) choppers, and wherein the TST operates in a continuous mode through variation of duty cycle of switching signals driving the one or more AC choppers.

13. The method as claimed in claim 11, further comprising:
discretely controlling the first compensation voltage (V_{REST}) and continuously controlling the second compensation voltages (V_{TST}) from zero to a maximum value within a pre-defined angle range.
